# EUROPÄISCHE PATENTSCHRIFT

(11) **EP 4 244 006 B1**
(45) Veröffentlichungstag und Bekanntmachung des Hinweises auf die Patenterteilung: **08.01.2025**
(21) Anmeldenummer: 21806977.1
(22) Anmeldetag: 03.11.2021
(51) Int. Cl.: B23B 41/00, B23C 3/00, F16C 33/46

(54) **VERWENDUNG EINER BEARBEITUNGSMASCHINE**
USE OF A MACHINE TOOL
UTILISATION D'UNE MACHINE-OUTIL

(30) Priorität: 10.11.2020 DE 102020129631; 02.11.2021 DE 102021128438
(43) Veröffentlichungstag der Anmeldung: 20.09.2023
(73) Patentinhaber: Schaeffler Technologies AG & Co. KG, 91074 Herzogenaurach (DE)
(72) Erfinder: SANDERS, Bernhard, 90574 Roßtal (DE); CONRAD, Stefan, 507190 Brasov (RO)
(86) Internationale Anmeldenummer: PCT/DE2021/100870
(87) Internationale Veröffentlichungsnummer: WO 2022/100785

(56) Entgegenhaltungen:
- DE-A1- 102006 004 932
- DE-A1- 102017 118 738
- GB-A- 543 807
- US-A1- 2013 266 251

## Beschreibung

Die Erfindung betrifft eine Verwendung einer Bearbeitungsmaschine, wobei die Bearbeitungsmaschine umfassend einen Werkstückträger und eine Hauptspindel ausgebildet ist, wobei an der Hauptspindel ein Bearbeitungswerkzeug sowie ein Spannmittel befestigt sind, wobei das Spannmittel umfassend eine Aufnahmeanordnung zum Befestigen des Spannmittels an der Hauptspindel der Bearbeitungsmaschine und eine Druckplatte zum Andrücken eines Werkstücks auf einem Werkstückträger ausgebildet ist.

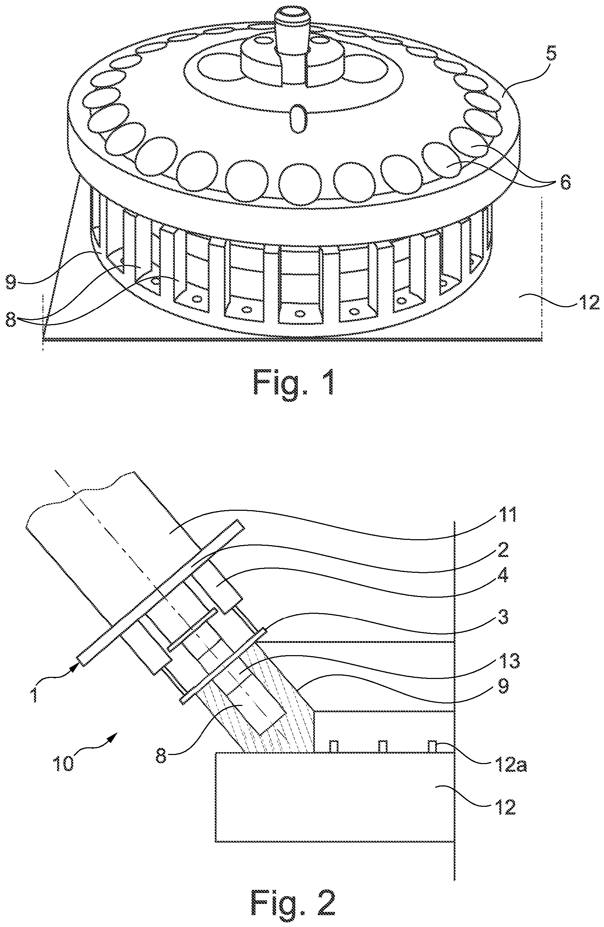

Bei der Herstellung von Taschen 8 zur Ausbildung eines Wälzlagerkäfigs 9 (vergleiche Figur 1) wird häufig ein Bearbeitungswerkzeug in Form eines Hartmetallbohrers verwendet. Dieser zerspant in axialer Richtung mit den entsprechenden Schnittgeschwindigkeiten und Vorschüben das Material in der dann entstehenden Käfigtasche 8. Hierbei ist es erforderlich, den entstehenden Käfig 9 in seiner vorgegebenen Position zu halten. Die Sicherstellung der vorgegebenen Position des Käfigs 9 wurde in der Vergangenheit durch Auflegen und manuelles Festspannen eines Spanndeckels 5 auf dem Werkstück erreicht (vergleiche Figur 1). Dieser Spanndeckel 5 war mit Öffnungen 6 versehen, die einen Durchtritt des Bearbeitungswerkzeugs zum Werkstück ermöglichten.

Die Auslegung des Spanndeckels 5 und der Öffnungen 6 muss dabei zwingend dem Bohrungsteilkreis sowie dem Durchmesser der Taschen 8 angepasst sein. Da zu ca. 95% die Abmaße der verschiedensten Käfige nicht identisch sind, war es erforderlich, eine Vielzahl von Spanndeckeln 5 konstruktiv auszulegen und herzustellen. Dies ist kostenintensiv hinsichtlich der Konstruktions-, Herstell- und auch Lagerkosten. Eine optimale Kühlung der Werkzeugschneiden ist zudem kaum möglich. Es bilden sich Spänenester aus und es besteht die Gefahr eines Späneeinzugs in die Taschenbohrung. Jeder Spanndeckel muss mit entsprechendem Drehmoment manuell gespannt werden. Die erforderliche Zeit zum Anbringen und Entfernen des Deckels für jedes zu bearbeitende Werkstück ist merklich.

Die DE 10 2017 118 738 A1 offenbart ein Verfahren zur Herstellung eines Kammkäfigs mittels eines Fräswerkzeugs, wobei eine Bohrbrille das Werkstück mit einer mechanischen oder hydraulischen Haltekraft beaufschlagt.

Die DE 10 2006 004 932 A1 offenbart einen Niederhalter für eine Werkzeugmaschine.

Die AT 509 502 B1 offenbart eine Vorrichtung zur Bearbeitung eines ein Verbundmaterial mit Fasern und einem Matrixwerkstoff aufweisenden Werkstücks. Dabei ist ein in einem Stator oder einer Spindel drehbar gelagertes Werkzeug, insbesondere Bohr- oder Fräswerkzeug, vorhanden. Weiterhin ist ein Niederhalteelement vorgesehen, das gegen die Oberfläche des Werkstücks gedrückt wird und ein Ausfransen oder eine Beschädigung des Werkstücks im an die Bearbeitungsstelle angrenzenden Bereich verhindern soll.

Es ist Aufgabe der Erfindung, die Herstellung von Taschen an Wälzlagerkäfigen zu vereinfachen und zu beschleunigen.

Die Aufgabe wird durch eine Verwendung gemäß Anspruch 1 gelöst.

Erfindungsgemäß ist die Verwendung einer Bearbeitungsmaschine zum Einbringen und/oder Bearbeiten von Taschen zur Aufnahme von Wälzkörpern an einem Werkstück in Form eines Wälzlagerkäfigs vorgesehen, wobei die Bearbeitungsmaschine umfassend einen Werkstückträger und eine Hauptspindel ausgebildet ist, wobei an der Hauptspindel ein Bearbeitungswerkzeug sowie ein Spannmittel befestigt sind. Das Spannmittel umfasst eine Aufnahmeanordnung zum Befestigen des Spannmittels an der Hauptspindel der Bearbeitungsmaschine und eine Druckplatte zum Andrücken eines Werkstücks auf einem Werkstückträger, wobei die Aufnahmeanordnung und die Druckplatte über mindestens einen Druckzylinder verbunden sind. Mittels des mindestens einen Druckzylinders ist ein Anpressdruck der Druckplatte am Werkstück definiert einstellbar. Das Bearbeitungswerkzeug ist derart angeordnet, dass das Bearbeitungswerkzeug bei der Bearbeitung des am Werkstückträger mittels der Druckplatte angedrückten Werkstücks durch eine Durchtrittsöffnung in der Druckplatte führbar ist.

Die Befestigung des Bearbeitungswerkzeugs sowie des Spannmittels an der Hauptspindel erfolgt bevorzugt über eine Standardschnittstelle, beispielsweise vom Typ SK (Steilkegel-Schnittstelle), HSK (Hochschaftkegel-Schnittstelle) oder Capto.

Der Wälzlagerkäfig ist dabei insbesondere aus Kupfer oder einer Kupfer-Basislegierung gebildet. Derartige Wälzlagerkäfige sind bei der Bearbeitung, besonders beim Fertigen der Taschen für die Aufnahme von Wälzkörpern, anfällig für Verzug und Verwindungen.

Die Druckplatte ist insbesondere ringförmig ausgebildet und bildet eine Durchtrittsöffnung für ein an der Spindel befestigtes Bearbeitungswerkzeug aus.

Insbesondere ist das Bearbeitungswerkzeug derart angeordnet, dass das Bearbeitungswerkzeug bei der Bearbeitung des am Werkstückträger mittels der Druckplatte angedrückten Werkstücks zentrisch durch die Durchtrittsöffnung in der Druckplatte führbar ist

Das Bearbeitungswerkzeug ist vorzugsweise durch eine Bohreinrichtung oder durch eine Fräseinrichtung gebildet.

Die Verwendung umfasst bevorzugt ein Verfahren zur Herstellung mindestens einer Tasche zur Aufnahme eines Wälzkörpers an einem Werkstück in Form eines Wälzlagerkäfigs mit den folgenden Schritten:
Bereitstellen der Bearbeitungsmaschine,
Fixieren einer Position des Wälzlagerkäfigs auf dem Werkstückträger,
Andrücken des Wälzlagerkäfigs mittels der Druckplatte an den Werkstückträger,
Ausbilden einer ersten Tasche mittels des Bearbeitungswerkzeuges, und
Lösen der Druckplatte vom Wälzlagerkäfig.

Die mindestens eine Tasche wird dabei bevorzugt gebohrt oder gefräst.

Die Druckplatte des Spannmittels ersetzt im Vergleich zum Stand der Technik einen Spanndeckel, wobei mindestens ein Druckzylinder, bevorzugt zwei oder drei Druckzylinder, die Seitenwände der Tasche in Position halten. Diese Druckzylinder entspannen und spannen durch eine Hubbewegung die Seitenwände der Tasche. Insbesondere handelt es sich bei den Druckzylindern um Hydraulikzylinder. Insbesondere ist eine Federkraft der Druckzylinder über Ventile einstellbar.

Der Anpressdruck oder Spanndruck ist gezielt und definiert einstellbar, so dass dieser während des gesamten Bearbeitungsschritts konstant gehalten werden kann.

Zudem kann das Spannmittel den Bewegungsachsen der Hauptspindel folgend nicht nur senkrecht auf das Wälzlagerbauteil drückend angeordnet werden, sondern auch in einem Winkel zur Senkrechten angedrückt werden. Weist der Wälzlagerkäfig demnach eine schräge Fläche an seiner dem Werkstückträger abgewandten Oberseite auf, kann die Druckplatte darauf aufgesetzt und angedrückt werden.

Die erfindungsgemäße Verwendung bringt eine Kosteneinsparung im Vergleich zu den Konstruktions-, Herstell- und Lagerkosten der bisher verwendeten Spanndeckel mit sich.

Lediglich ein einziges Spannmittel ist für alle zu bearbeitenden Käfigtypen einsetzbar. Zudem ist ein punktgenaues Spannen möglich. Das Spannmittel ermöglicht weiterhin eine optimale Kühlung der Werkzeugschneide des Bearbeitungswerkzeugs. Schmiermittel kann in einfacher Weise dem Bearbeitungswerkzeug zugeführt werden. Dazu ist bevorzugt mindestens eine Schmiermittelzuführeinrichtung am Spannmittel vorgesehen.

Eine Bildung von Spänenestern wird zuverlässig vermieden. Schließlich führt der Einsatz des Spannmittels zu signifikanten Rüstzeitminimierungen bei der Bearbeitung von Käfigtaschen. Der Einsatz des Spannmittels verhindert einen Verzug des Wälzlagerkäfigs während der Bearbeitung, erhöht die Genauigkeit der Bearbeitung und damit auch der Bauteil-Endgeometrie.

Die Figuren 1 bis 3 sollen die Erfindung beispielhaft erläutern. So zeigt
- Figur 1: einen Spanndeckel gemäß einem herkömmlichen Fertigungsverfahren nach dem Stand der Technik;
- Figur 2: ein Spannmittel in einer Bearbeitungsmaschine, und
- Figur 3: ein Spannmittel zusammen mit einer Spannplatte in einer Bearbeitungsmaschine.

Figur 1 wurde bereits in der Beschreibungseinleitung näher erläutert und zeigt ein herkömmlichen Fertigungsverfahren nach dem Stand der Technik unter Verwendung eines Spanndeckels 5 mit Öffnungen 6, die ein Werkstück 9 in Form eines Wälzlagerkäfigs mit Taschen 8 gegen einen Werkstückträger 12 spannt. Ein hier nicht dargestelltes Bearbeitungswerkzeug in Form eines Bohrers wird durch die Öffnungen 6 im Spanndeckel 5 geführt, um die Taschen 8 zu bilden.

Figur 2 zeigt ein Spannmittel 1 in einer Bearbeitungsmaschine 10. Das Spannmittel 1 umfasst eine Aufnahmeanordnung 2 zum Befestigen des Spannmittels 1 an einer Spindel 11, hier Hauptspindel, der Bearbeitungsmaschine 10. Das Spannmittel 1 umfasst weiterhin eine Druckplatte 3 zum Andrücken eines Werkstücks 9 in Form eines Schrägkäfigs auf einem Werkstückträger 12 der Bearbeitungsmaschine 10. Der Schrägkäfig ist im Schnittbild und im Halbschnitt dargestellt. Der Schrägkäfig ist im Bereich seines Innendurchmessers durch Fixierklammern in seiner Position auf dem Werkstückträger 12 fixiert. Die Aufnahmeanordnung 2 und die Druckplatte 3 sind hier über zwei Druckzylinder 4 verbunden. Mittels der Druckzylinder 4 ist ein Anpressdruck der Druckplatte 3 am Werkstück 9, hier Schrägkäfig, definiert einstellbar. Die Bearbeitungsmaschine 10 umfasst ein Bearbeitungswerkzeug 13 in Form eines Bohrwerkzeugs. Dieses taucht durch die Druckplatte 3 hindurch und bildet die Tasche 8 im Werkstück 9 aus. Die Spindel 11 ist hier in einem 45°-Winkel zum Werkstückträger 12 ausgerichtet, um die Tasche 8 in dem Schrägkäfig zu bilden. Die Spindel 11 kann aber auch in einem anderen Winkel zum Werkstückträger 12 ausgerichtet werden, je nach zu bearbeitender Käfigtype. Die Bearbeitung gerader Käfige, wie in Figur 1 gezeigt, erfolgt demgemäß unter Ausrichtung der Spindel 11 in einem 90°-Winkel zum Werkstückträger 12.

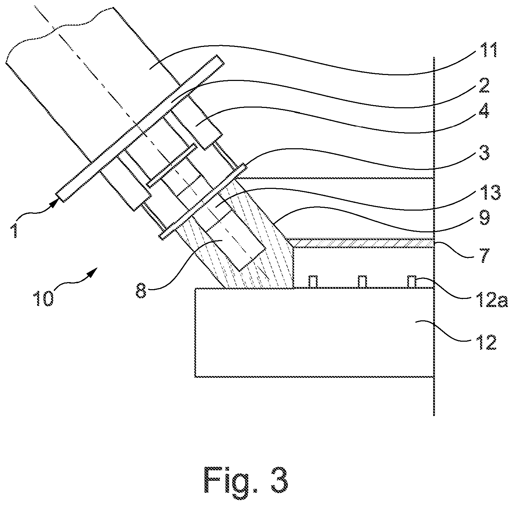

Figur 3 zeigt ein Spannmittel 1 zusammen mit einer Spannplatte 7 in einer Bearbeitungsmaschine 10. Gleiche Bezugszeichen wie in Figur 2 kennzeichnen gleiche Elemente. Die hier zusätzlich angeordnete Spannplatte 7 ermöglicht eine zentrale Fixierung der Position des Wälzlagerkäfigs, beispielsweise über eine hier nicht dargestellte mittige Verschraubung der Spannplatte 7 am Werkstückträger 12, so dass die Fixierklemmen 12a gegebenenfalls entfallen können.

### Bezugszeichenliste

- 1: Spannmittel
- 2: Aufnahmeanordnung
- 3: Druckplatte
- 4: Druckzylinder
- 5: Spanndeckel
- 6: Öffnung im Spanndeckel
- 7: Spannplatte
- 8: Tasche
- 9: Werkstück
- 10: Bearbeitungsmaschine
- 11: Spindel, Hauptspindel
- 12: Werkstückträger
- 12a: Fixierklemme
- 13: Bearbeitungswerkzeug

## Patentansprüche

1. Verwendung einer Bearbeitungsmaschine (10) zum Einbringen und/oder Bearbeiten von Taschen (8) zur Aufnahme von Wälzkörpern an einem Werkstück (9) in Form eines Wälzlagerkäfigs, wobei die Bearbeitungsmaschine (10) umfassend einen Werkstückträger(12) und eine Hauptspindel (11) ausgebildet ist, wobei an der Hauptspindel (11) ein Bearbeitungswerkzeug (13) sowie ein Spannmittel (1) befestigt sind,
**dadurch gekennzeichnet, dass**
das Spannmittel (1) umfassend eine Aufnahmeanordnung (2) zum Befestigen des Spannmittels (1) an der Hauptspindel (11) der Bearbeitungsmaschine (10) und eine Druckplatte (3) zum Andrücken eines Werkstücks (9) auf einem Werkstückträger (12) ausgebildet ist, dass die Aufnahmeanordnung (2) und die Druckplatte (3) über mindestens einen Druckzylinder (4) verbunden sind, dass mittels des mindestens einen Druckzylinders (4) ein Anpressdruck der Druckplatte (3) am Werkstück (9) definiert einstellbar ist, und dass das Bearbeitungswerkzeug (13) derart angeordnet ist, dass das Bearbeitungswerkzeug (13) bei der Bearbeitung des am Werkstückträger (12) mittels der Druckplatte (3) angedrückten Werkstücks (9) durch eine Durchtrittsöffnung in der Druckplatte (3) führbar ist.

2. Verwendung nach Anspruch 1, wobei die Druckplatte (3) ringförmig ausgebildet wird und eine Durchtrittsöffnung für ein an der Spindel (11) befestigtes Bearbeitungswerkzeug (13) ausbildet.

3. Verwendung nach einem der Ansprüche 1 oder 2, wobei das Bearbeitungswerkzeug (13) derart angeordnet wird, dass das Bearbeitungswerkzeug (13) bei der Bearbeitung des am Werkstückträger (12) mittels der Druckplatte (3) angedrückten Werkstücks (9) zentrisch durch die Durchtrittsöffnung in der Druckplatte (3) führbar ist.

4. Verwendung nach einem der Ansprüche 1 bis 3, wobei das Bearbeitungswerkzeug (13) durch eine Bohreinrichtung gebildet wird.

5. Verwendung nach einem der Ansprüche 1 bis 3, wobei das Bearbeitungswerkzeug (13) durch eine Fräseinrichtung gebildet wird.

6. Verwendung nach einem der Ansprüche 1 bis 5, wobei die Herstellung mindestens einer Tasche (8) zur Aufnahme eines Wälzkörpers an einem Werkstück (9) in Form eines Wälzlagerkäfigs mit den folgenden Schritten erfolgt:
Bereitstellen der Bearbeitungsmaschine (10),
Fixieren einer Position des Wälzlagerkäfigs auf dem Werkstückträger (12),
Andrücken des Wälzlagerkäfigs mittels der Druckplatte (3) an den Werkstückträger (12),
Ausbilden einer ersten Tasche (8) mittels des Bearbeitungswerkzeuges (13), und Lösen der Druckplatte (3) vom Wälzlagerkäfig.

7. Verwendung nach Anspruch 6, wobei die mindestens eine Tasche (8) gebohrt oder gefräst wird.

8. Verwendung nach einem der Ansprüche 1 bis 7, wobei der Wälzlagerkäfig aus Kupfer oder eine Kupfer-Basislegierung gebildet wird.

9. Verwendung nach einem der Ansprüche 1 bis 8, wobei eine Federkraft der Druckzylinder (4) über Ventile einstellbar ist.

10. Verwendung nach einem der Ansprüche 1 bis 9, wobei mindestens eine Schmiermittelzuführeinrichtung am Spannmittel (1) vorgesehen ist.

## Claims

1. Use of a machine tool (10) for introducing and/or machining pockets (8) for receiving rolling elements on a workpiece (9) in the form of a rolling bearing cage, wherein the machine tool (10) is designed to comprise a workpiece carrier (12) and a main spindle (11), wherein a machining tool (13) and a clamping means (1) are fastened to the main spindle (11),
**characterised in that**
the clamping means (1) is designed to comprise a receiving arrangement (2) for fastening the clamping means (1) to the main spindle (11) of the machine tool (10), and a pressure plate (3) for pressing a workpiece (9) on a workpiece carrier (12), that the receiving arrangement (2) and the pressure plate (3) are connected via at least one pressure cylinder (4), that a contact pressure of the pressure plate (3) on the workpiece (9) is adjustable in a defined manner by means of the at least one pressure cylinder (4), and that the machining tool (13) is arranged such that the machining tool (13) can be guided through a passage opening in the pressure plate (3) during the machining of the workpiece (9) pressed against the workpiece carrier (12) by means of the pressure plate (3).

2. The use according to claim 1, wherein the pressure plate (3) is annular and forms a passage opening for a machining tool (13) fastened to the spindle (11).

3. The use according to any one of claims 1 or 2, wherein the machining tool (13) is arranged such that the machining tool (13) can be guided centrally through the passage opening in the pressure plate (3) during machining of the workpiece (9) pressed against the workpiece carrier (12) by means of the pressure plate (3).

4. The use according to any one of claims 1 to 3, wherein the machining tool (13) is formed by a drilling device.

5. The use according to any one of claims 1 to 3, wherein the machining tool (13) is formed by a milling device.

6. The use according to any one of claims 1 to 5, wherein at least one pocket (8) for receiving a rolling element on a workpiece (9) in the form of a rolling bearing cage is produced with the following steps:
providing the machine tool (10),
fixing a position of the rolling bearing cage on the workpiece carrier (12),
pressing the rolling bearing cage against the workpiece carrier (12) by means of the pressure plate (3),
forming a first pocket (8) by means of the machining tool (13), and releasing the pressure plate (3) from the rolling bearing cage.

7. The use according to claim 6, wherein the at least one pocket (8) is drilled or milled.

8. The use according to any one of claims 1 to 7, wherein the rolling bearing cage is formed from copper or a copper-based alloy.

9. The use according to any one of claims 1 to 8, wherein a spring force of the pressure cylinders (4) is adjustable via valves.

10. The use according to any one of claims 1 to 9, wherein at least one lubricant supply device is provided on the clamping means (1).

## Revendications

1. Utilisation d'une machine-outil (10) pour introduire et/ou usiner des poches (8) destinées à recevoir des corps de roulement sur une pièce (9) sous la forme d'une cage de roulement, la machine-outil (10) étant conçue comprenant un porte-pièce (12) et une broche principale (11), un outil d'usinage (13) et un moyen de serrage (1) étant fixés à la broche principale (11),
**caractérisée en ce que**
le moyen de serrage (1) est conçu comprenant un agencement de réception (2) pour fixer le moyen de serrage (1) à la broche principale (11) de la machine-outil (10) et une plaque de pression (3) pour presser une pièce (9) sur un porte-pièce (12), **en ce que** l'agencement de réception (2) et la plaque de pression (3) sont reliés par l'intermédiaire d'au moins un cylindre de pression (4), **en ce qu'**une pression de contact de la plaque de pression (3) sur la pièce (9) peut être réglée de manière définie au moyen du ou des cylindres de pression (4), et **en ce que** l'outil d'usinage (13) est disposé de façon que l'outil d'usinage (13) peut être guidé à travers une ouverture de passage dans la plaque de pression (3) lors de l'usinage de la pièce (9) pressée sur le porte-pièce (12) au moyen de la plaque de pression (3).

2. Utilisation selon la revendication 1, dans laquelle la plaque de pression (3) est conçue de manière annulaire et forme une ouverture de passage pour un outil d'usinage (13) fixé à la broche (11).

3. Utilisation selon l'une quelconque des revendications 1 ou 2, dans laquelle l'outil d'usinage (13) est disposé de façon que l'outil d'usinage (13) peut être guidé de manière centrée à travers l'ouverture de passage dans la plaque de pression (3) lors de l'usinage de la pièce (9) pressée sur le porte-pièce (12) au moyen de la plaque de pression (3).

4. Utilisation selon l'une quelconque des revendications 1 à 3, dans laquelle l'outil d'usinage (13) est formé par un dispositif de perçage.

5. Utilisation selon l'une quelconque des revendications 1 à 3, dans laquelle l'outil d'usinage (13) est formé par un dispositif de fraisage.

6. Utilisation selon l'une quelconque des revendications 1 à 5, dans laquelle la réalisation d'au moins une poche (8) pour recevoir un corps de roulement sur une pièce (9) en forme de cage de roulement s'effectue avec les étapes suivantes :
fourniture de la machine-outil (10),
fixation d'une position de la cage de roulement sur le porte-pièce (12),
pression de la cage de roulement sur le porte-pièce (12) au moyen de la plaque de pression (3),
formation d'une première poche (8) au moyen de l'outil d'usinage (13) et libération de la plaque de pression (3) de la cage de roulement.

7. Utilisation selon la revendication 6, dans laquelle l'au moins une poche (8) est percée ou fraisée.

8. Utilisation selon l'une quelconque des revendications 1 à 7, dans laquelle la cage de roulement est formée à partir de cuivre ou d'un alliage à base de cuivre.

9. Utilisation selon l'une quelconque des revendications 1 à 8, dans laquelle une force élastique du cylindre de pression (4) peut être réglée par l'intermédiaire de soupapes.

10. Utilisation selon l'une quelconque des revendications 1 à 9, dans laquelle au moins un dispositif d'alimentation en lubrifiant est prévu sur le moyen de serrage (1).
